# FASCICULE DE BREVET EUROPEEN

(11) **EP 3 338 020 B1**
(45) Date de publication et mention de la délivrance du brevet: **24.07.2019**
(21) Numéro de dépôt: 16770046.7
(22) Date de dépôt: 19.08.2016
(51) Int. Cl.: F16L 59/065, B32B 15/085, B32B 15/09, B32B 15/20, E04B 1/80, F28F 13/00, B65D 81/38, F28D 20/02

(54) **ENSEMBLE ET PANNEAU ARTICULÉ, A PORTIONS INTERMÉDIAIRES DE POSITIONNEMENT, POUR UNE ISOLATION THERMIQUE**
ANORDNUNG UND GEGLIEDERTE TAFEL MIT ZWISCHENPOSITIONIERUNGSTEILEN ZUR WÄRMEDÄMMUNG
ASSEMBLY AND ARTICULATED PANEL WITH INTERMEDIATE POSITIONING PORTIONS, FOR THERMAL INSULATION

(30) Priorité: 20.08.2015 FR 1557835; 20.08.2015 FR 1557842
(43) Date de publication de la demande: 27.06.2018
(73) Titulaire: Hutchinson, 75008 Paris (FR)
(72) Inventeur: CHOPARD, Fabrice, 38400 Saint Martin D'Heres (FR); POUPA, Nadine, 45680 Dordives (FR); BLINE, Paul, 45200 Montargis (FR); DOMINAK, Christophe, 45290 Varennes Changy (FR); HUILLET, Cédric, 45200 Montargis (FR); CHAUVET, Boris, 45210 Ferrieres (FR)
(74) Mandataire: Pichat, Thierry
(86) Numéro de dépôt international: PCT/FR2016/052097
(87) Numéro de publication internationale: WO 2017/029460

(56) Documents cités:
- EP-A1- 1 099 646
- EP-A1- 1 275 893
- WO-A1-89/00670
- WO-A1-99/32374
- WO-A1-2011/102337
- WO-A1-2015/002505
- DE-A1- 10 123 453
- DE-U1-202009 005 908
- JP-A- H0 791 594
- JP-A- 2007 278 626
- JP-A- 2008 039 282
- JP-A- 2010 084 813
- US-A- 5 843 353
- US-A- 5 975 336

## Description

La présente invention concerne en particulier, un panneau articulé pouvant être fermé sur lui-même et comprenant une série de poches sous atmosphère contrôlée visant à favoriser une gestion thermique performante.

Un tel panneau est connu par exemple du document US 5843353.

Est aussi concerné, pour une isolation thermique, un ensemble utilisant les avantages d'un tel panneau qui sera donc à constitution PIV (panneau isolant sous vide ; VIP en anglais) et favorisera la réalisation d'une boîte extérieure isolante.

Quant aux panneaux PIV, ce sont des panneaux où un isolant thermique (noyau), qui peut être en matériau poreux, par exemple un gel/une poudre de silice est par exemple pressé en plaque et, entouré, sous atmosphère contrôlée, d'une feuille enveloppante étanche aux gaz. Si vide il y a, une pression résiduelle comprise entre 10 et 10⁴ Pa permet typiquement d'abaisser la conductivité thermique à 0,02, voire moins de 0,01 W/m·K environ dans les conditions d'utilisation.

A ce sujet, dans la demande, sous « atmosphère contrôlée » ou « à constitution PIV » aura pour sens que le volume concerné sera soit sous vide comme ci-dessus, soit rempli par un gaz ayant une conductivité thermique inférieure à celle de l'air ambiant, 26mW/m.K. Une structure sous vide d'air partiel (donc une enveloppe étanche à l'air) pourra contenir au moins un matériau isolant thermique a priori poreux (tailles de pores inférieures à 1 microns), voire nanoporeux (tailles de pores inférieures à 10⁻⁹m).

« Poreux » désignera un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1 micron, et préférentiellement encore à 10⁻⁹m (structure nanoporeuse), pour des questions en particulier de tenue au vieillissement et donc de possible dépression moins forte dans l'enveloppe PIV.

Or, à ce jour les panneaux PIV ne semblent pouvoir répondre aux attentes du marché.

Leurs mises en oeuvre sur le terrain est un problème, en particulier leur fabrication si elle doit être industrialisable en série, y compris leur conditionnement.

De fait, fabriquer à plat, puis fermer sur lui-même un tel panneau permettrait une mise en oeuvre facile de la solution « à poches ».

En outre, un problème existe pour gérer thermiquement, et en particulier isoler thermiquement, de façon qui peut être non plane, donc en particulier dans des angles, un volume intérieur (par exemple de stockage d'une batterie d'accumulateurs ou d'une boîte à médicaments) une structure.

C'est dans ce contexte qu'est ici proposé un panneau articulé pouvant être fermé sur lui-même et comprenant une série de poches sous atmosphère contrôlée :
- contenant individuellement au moins un matériau isolant thermique, et
- réunies par des portions intermédiaires flexibles où deux poches successives peuvent s'articuler l'une par rapport à l'autre,
certaines au moins des portions intermédiaires d'articulation comprenant :
- une partie tubulaire définie par un enroulement thermiquement isolant ou par une portion renflée renfermant un matériau thermiquement isolant dans une enceinte tubulaire sous atmosphère contrôlée, et
- deux parties d'au moins une feuille flexible, chacune interposée entre ladite partie tubulaire et une dite poche.

Grâce à une telle partie tubulaire (de section circulaire ou pas), on pourra à la fois favoriser une isolation dans un angle ou un changement de plan et assurer un appui de positionnement, si nécessaire, voire une structuration mécanique d'angle.

Pour favoriser une isolation thermique très performante, il est par ailleurs proposé que les poches et les parties tubulaires soient sous vide et que lesdits matériaux isolants thermiques contenus soient poreux.

En outre, de nouveau pour favoriser une fabrication en grande série et uniformiser ladite atmosphère contrôlée dans l'ensemble du panneau, il est proposé :
- soit que les poches, les parties tubulaires et lesdites parties de feuille(s) flexible(s) intercalées (c'est-à-dire interposées) soient communément sous une même atmosphère contrôlée, avec un seul scellement, uniquement en périphérie extérieur du panneau,
- soit que lesdites poches soient individuellement sous cette atmosphère contrôlée et que deux poches successives soient reliées par desdites parties de feuille(s) flexible(s) qui entourerai(en)t et lierai(en)t alors ensemble lesdites poches, les parties tubulaires et lesdites parties de feuille(s) flexible(s) intercalées.

Dans les deux cas, la(les) feuille(s) flexible(s) lierai(n)t ensemble les poches et parties tubulaires pour la cohésion d'ensemble et la gestion thermique attendue

Par ailleurs, il est proposé que les parties tubulaires contiennent un matériau isolant thermique poreux différent du matériau isolant thermique des poches.

Ainsi, on pourra rendre souple le matériau isolant des parties tubulaires et plus rigide celui des poches.

Concernant maintenant « l'ensemble » précité, il est visé de favoriser la mise en place et le maintien des pièces qui le constituent.

A cet effet, il est proposé que cet ensemble comprenne :
- le panneau articulé présenté ci-avant, avec tout ou partie de ses caractéristiques, les parties tubulaires présentant alors, suivant un axe (A) autour duquel le panneau est enroulé sur lui-même, des sur-longueurs L1-L2) par rapport à une longueur (L2) des poches, et
- un fond et un couvercle intégrant ou doublés chacun par un dit matériau isolant thermique et à angles concaves engagés avec lesdites sur-longueurs, pour les recevoir à l'endroit de ces angles concaves, de manière à obtenir un volume intérieur thermiquement isolé de l'extérieur.

Ainsi, on associera isolation et ergonomies de fabrication et d'utilisation.

Un autre ensemble est aussi concerné qui comprend :
- le même panneau articulé, avec donc tout ou partie de ses caractéristiques,,
- au moins une structure pourvue d'une paroi périphérique et présentant au moins un volume intérieur où est présent l'un au moins parmi :
   -- un fluide frigorigène ou caloporteur pouvant circuler dans le ou lesdits volumes sous l'action de moyens de circulation,
   -- des éléments de stockage et de restitution d'une énergie thermique,
   -- au moins un élément à maintenir à une certaine température, et/ou
   -- au moins un élément dégageant de la chaleur,
- au moins une couche contenant un matériau MCP disposée dans la paroi périphérique ou autour de ladite paroi périphérique,
- des entretoises de maintien interposées latéralement entre ladite paroi périphérique et un manchon périphérique, les excroissances délimitant entre elles, latéralement et autour de la paroi périphérique, des espaces ouverts où sont disposées les poches du panneau articulé, le manchon périphérique s'étendant ainsi autour dudit panneau.

Ainsi, de nouveau, on favorisera la mise en place et le maintien des pièces qui constituent cet ensemble et associera isolation et ergonomies de fabrication et d'utilisation.

A toute fin, il est précisé qu'un matériau à changement de phase - ou MCP- désigne tout matériau capable de changer d'état physique dans une plage de température restreinte. Le transfert de chaleur (ou transfert thermique) peut s'opérer par utilisation de sa Chaleur Latente (CL) : le matériau peut stocker ou céder de l'énergie par simple changement d'état, tout en conservant une température sensiblement constante, celle du changement d'état.

Concernant la réalisation des entretoises, il est proposé aux fins déjà citées :
- que les entretoises soient creuses et reçoivent les parties tubulaires du panneau, et/ou,
- qu'en tant qu'entretoises, ladite paroi périphérique présente extérieurement des étriers où sont disposées lesdites parties tubulaires.

Le terme « manchon » ci-avant couvre tant les structures ouvertes à au moins une extrémité, comme celui repéré 38 ci-après, que les structures formant boîtier, par exemple en deux demi-coquilles complémentaires.

De préférence, les excroissances de maintien seront thermiquement isolantes et renfermeront pour cela une couche en matériau isolant thermique (qui peut être à constitution PIV).

Si nécessaire, l'invention sera encore mieux comprise et d'autres caractéristiques, détails et avantages de celle-ci pourront apparaître encore à la lecture de la description qui suit, faite à titre d'exemple non limitatif et en référence aux dessins annexés, dans lesquels :
- la figure 1 schématise une coopération via des parties tubulaires, ou par étriers, de positionnement entre une paroi périphérique à isoler et des poches isolantes périphériques ;
- les figures 2,3 schématisent, en coupe et vue locale (à prolonger de part et d'autre) deux structures possibles de poches isolantes ;
- les figures 4 à 7 schématisent, encore en coupe suivant des bandes partielles plus ou moins longues des alternatives de réalisation desdites poches, avec ici des portions intermédiaires d'articulation,
- la figure 8 schématise une alternative ou un complément à la solution de la figure 1, avec un panneau articulable dans un état fermé ;
- la figure 9 schématise une structure interne souple de matériau isolant thermique ;
- la figure 10 est un schéma de montage de l'isolation périphérique d'une structure à isoler;
- et la figure 11 schématise une partie de panneau articulable dans une paroi rigide.

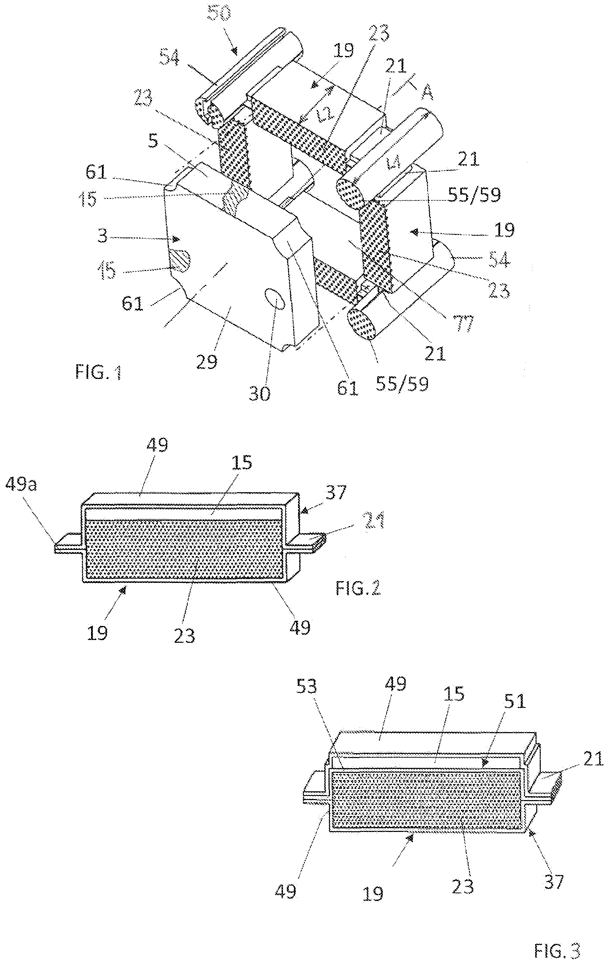

Figure 1 notamment, on voit des poches 19 continument réunies, définissant ensemble, un panneau articulable 50 pouvant :
- typiquement dans un état opérationnel, être fermé sur lui-même (comme illustré) à disposer ainsi par exemple autour d'une paroi 5 à isoler,
- et être déployé sensiblement à plat, par exemple pour être stocké et dans un état qui peut être non opérationnel (voir figures 2-5).

Les poches isolantes 19 se succèdent de façon continue en étant liées deux à deux par des portions intermédiaires flexibles 21 où deux poches successives peuvent s'articuler l'une par rapport à l'autre.

Et des parties tubulaires (de section circulaire ou pas) définie intérieurement et individuellement par un enroulement 55 ou une portion renflée 59 sont définie entre deux zones d'articulation 21.

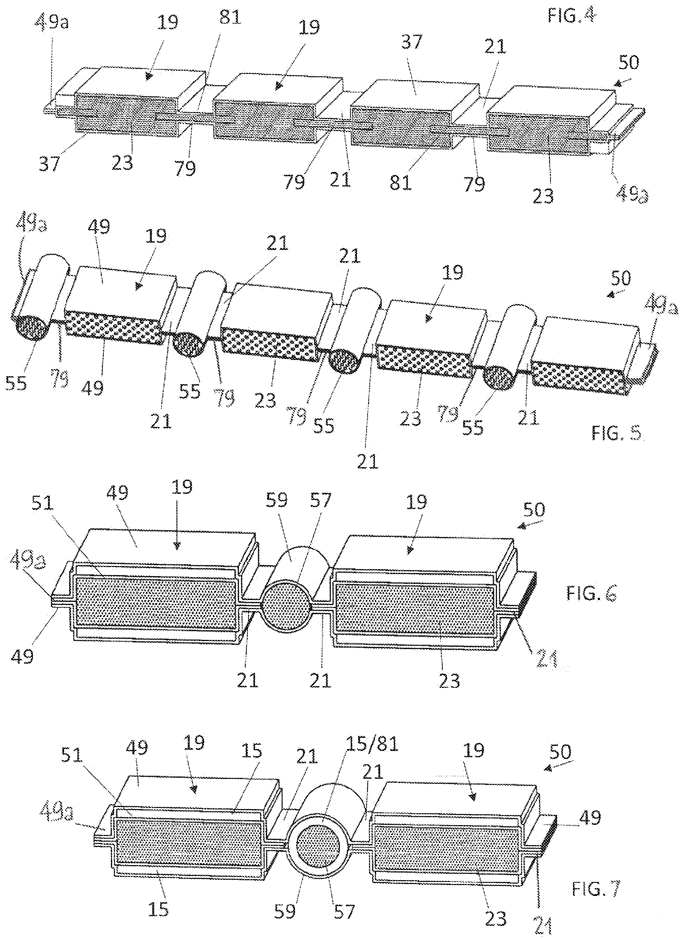

Les figures 2,3 schématisent une réalisation favorable de ces poches et portions intermédiaires 21. Ainsi, même si seule une poche 19 est montrée, il suffit de reproduire le modèle ensuite de part et d'autre pour continuer la structure, comme aux exemples des figures 4-7.

On peut constater que, dans ces réalisations privilégiées, chaque poche 19 à constitution PIV comprendra:
- un élément constitué d'un matériau isolant thermique 23 qui sera donc ici poreux compte tenu d'une mise sous vide dans l'exemple, et
- au moins une enveloppe extérieure 37 fermée qui contient ledit isolant thermique.

Cette enveloppe extérieure 37 peut être constituée d'au moins une feuille 49 flexible ou déformable.

Deux cas notamment envisagé :
- a) soit ladite feuille flexible 49 est scellable (thermiquement/chimiquement, en 49a, autour de la poche) et étanche au matériau poreux 23 et à l'air (voire aussi à l'eau), de sorte qu'un vide d'air régnant dans l'enveloppe 37, un dit panneau isolant sous vide (PIV) est ainsi défini, comme montré figure 2 (où la feuille 49 est aussi étanche à un matériau MCP adjoint),
- b) soit le second élément isolant thermique 23 est contenu à l'intérieur d'une seconde enveloppe fermée 51 à feuille flexible 53 scellable et étanche au matériau poreux et à l'air (voire aussi à l'eau), de sorte qu'un vide d'air régnant dans la seconde enveloppe, un dit panneau isolant sous vide (PIV) est ainsi défini, comme montré figure 3.

Comme schématisé figures 2,3,6,7, au moins un premier élément, ou une première couche, 15 contenant un matériau MCP pourrait donc être disposé à côté de l'isolant thermique 23.

A noter que deux couches 15 contenant un ou plusieurs matériaux MCP pourraient même (comme figures 6,7) être disposées de part et d'autre de la couche de matériau poreux 23, voire aucune telle couche, notamment si elle prévue uniquement dans la paroi périphérique 15 d'une pièce à entourer et protéger via le panneau 50, comme figure 1.

Le matériau isolant 23 pourra être de la laine de verre, une mousse de polyuréthane ou de polyisocyanurate, ou encore plus favorablement un matériau thermiquement isolant poreux.

Cet isolant 23 pourrait aussi se composer favorablement d'un matériau nano-poreux (à nanostructure, tel poudre de silice ou un aérogel ou son pyrolat, tel un aérogel de silice) confiné donc de préférence dans une feuille flexible 49 ou 53 qui ne laissera passer ni les vapeurs d'eau ni les gaz. Le PIV obtenu sera vidé de son air pour obtenir par exemple une pression de quelques millibars, puis pourra être scellé. Typiquement, la conductivité thermique λ d'un tel PIV sera de 0.004/0.008 W/m.K à pression atmosphérique et à 20°C. L'utilisation de panneaux isolants sous vide devrait permettre d'atteindre une résistance thermique R = 5 m².K/W avec seulement 35 mm d'isolant.

Une possible composition du matériau 23 est la suivante : 80-85 % de dioxyde de silice (SiO2), 15-20 % de carbure de silicium (SiC) et possiblement 5 % d'autres produits (liant/charges). Une épaisseur (e) de 0.4 à 3 cm est possible. Des exemples, pouvant ici s'appliquer, de panneau PIV et de matériau super-isolant sont en outre fournis dans WO2015/121540 et dans WO2014060906 (matériau poreux), respectivement.

Les solutions présentées ci-avant doivent permettre, dans un volume et poids acceptables notamment par des constructeurs aéronautiques ou automobiles, un stockage rapide d'une énergie thermique disponible au bout d'environ 6-10 minutes, le maintien de cette énergie pendant 12 à 15 heures, avant sa restitution rapide, typiquement quelques minutes (en particulier moins de 2-3mns), par exemple à un moteur lors d'une phase de démarrage à froid.

Les feuilles flexibles 49,53 du panneau PIV pourront typiquement être réalisées sous la forme d'un film multicouche comportant des films polymère (PE et PET) et de l'aluminium sous forme par exemple laminée (feuille d'épaisseur de l'ordre d'une dizaine de micromètre) ou métallisée (dépôt sous vide d'un film de quelques dizaines de nanomètre). Dans le cas b) ci-avant où il y a une double feuille : intérieure 53 et extérieure 49, la feuille 49 pourra par contre n'être donc un simple film polymère, tel un PE de 0.05 à 0.2 mm d'épaisseur, l'objet de cette feuille extérieure 49 pouvant alors n'être que de créer un simple sac pour contenir/réunir ensemble les éléments du panneau 50 à réunir entre eux.

A noter aussi que la/chaque enveloppe 37,51 pourra être typiquement formée de une ou deux feuille(s) disposée(s) de part et d'autre d'au moins le matériau 23 et scellée(s) à elle ou ensemble, périphériquement en 49a, et ce continument sur toute la périphérie de l'enveloppe sous atmosphère contrôlée.

Quoi qu'il en soit, un avantage de ces feuilles, directement en contact l'une avec l'autre à l'endroit des portions intermédiaires 21, comme illustré, si elles sont plusieurs, (ou de cette feuille si elle est unique) est qu'on pourra tirer parti de leur continuation physique à l'endroit de ces portions 21 d'écartement des poches 19 pour y créer une zone d'articulation.

Toutefois, l'utilisation simple de cette ou ces feuilles flexibles créerait une discontinuité d'isolation thermique entre les deux poches consécutives 19 ainsi réunies.

Or, dans certains cas, les portions intermédiaires 21 pourraient présenter des surfaces non négligeables d'autant plus gênantes en termes de ponts thermiques ; mais on peut aussi avoir à placer un panneau 50 ou un manchon en appui, par exemple pour le positionner correctement par rapport à son environnement.

D'autant plus dans ces cas, on trouvera donc un intérêt à ce qu'une partie tubulaire 54 (de section circulaire ou pas) définie intérieurement par un enroulement 55 ou une portion renflée 59 soit définie entre deux zones d'articulation 21 (chacune formée par la ou les feuilles flexibles précitées appliquées l'une contre l'autre), chaque zone étant elle-même réunie latéralement (donc à distance) d'un côté à la poche 19 concernée, ceci de façon régulière ou non dans la chaîne, comme montré notamment figures 1,5-7.

Chaque enroulement 55 sera favorablement un isolant thermique en rouleau (blanket en anglais). Un matériau nano-structuré, ou nano-poreux, pourrait convenir, tel un aérogel de silice. Il peut par exemple s'agir du produit souple, en rouleau, dénommé Spaceloft®, un isolant SIPA (Super Isolant à Pression Atmosphérique) proposé par la société ISOLProducts avec une conductivité thermique: λ = 0,0044 à 0,021 W/m.K à pression atmosphérique et à 20°C.

Chaque élément 55,59 sera par ailleurs favorablement enveloppé dans la/les feuilles flexibles précitées (pour maintenir une constitution PIV), En complément ou alternative, cette ou ces feuilles flexibles précitées réunissant deux poches 19 successives pourront donc envelopper, directement ou avec interposition d'une couche MCP 15, un matériau isolant thermique poreux 57 de préférence différent du matériau isolant thermique 23 des ou de chaque poche(s).

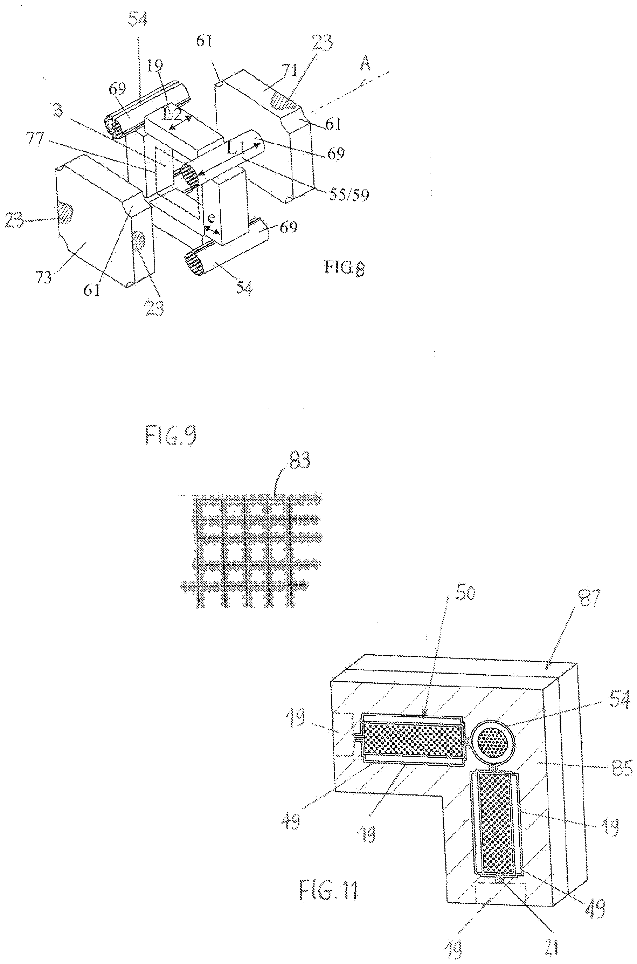

Les enroulements 55 et les portions renflées 59 présenteront favorablement une surface extérieure convexe. Ceci pourra donc notamment permettre un appui contre des surfaces extérieures complémentaires 61 de positionnement (voir figures 1,8) formées localement autour d'une dite paroi périphérique 5 ou de la tranche d'un couvercle et/ou d'un fond rapportés 71,73, ces surfaces 61 étant concaves, donc chacune en forme d'étrier, si les portions 59 et/ou les enroulements 55 enveloppés sont extérieurement convexes, comme schématisé figure 8.

Les surfaces extérieures 61 pourront aussi en particulier se situer à l'endroit de zones d'angles (voir illustrations) concaves ou convexes, pour associer alors articulation et fixation mécanique, dans le sens maintien ou positionnement. Des formes convexes sphériques ou cylindriques devraient être utiles, mais par exemple une forme de piliers à section rectangulaire est aussi possible.

Parallèlement à l'axe A autour duquel est enroulée le panneau articulé 50, les portions renflées 54 à structure 55 ou 59 présentent de nouveau une première longueur L1 supérieure à une seconde longueur L2 des poches 19, de sorte que les portions renflées disposent ainsi de sur-longueurs 69.

Ceci pourra être utile pour coopérer avec le fond 71 et/ou le couvercle 73, ici à angles concaves (ou creusés) 61, placés de part et d'autre, en bout de ces sur-longueurs, parallèlement à leur direction générale d'allongement A, pour les recevoir à l'endroit ici de ces angles concaves 61, de manière à obtenir un volume intérieur 77 thermiquement isolé de l'extérieur et où par exemple une structure 3 à paroi périphérique 5, à isoler thermiquement (telle qu'une batterie d'accumulateurs ou une boîte à médicaments), aura être placée.

Individuellement, ces fond 71 et/ou couvercle 73 intégreront ou seront doublés chacun par un isolant thermique 23, de préférence sous forme de poche 19 sous atmosphère contrôlée.

Une telle solution est légère, facile à monter/démonter, performante thermiquement.

Tant dans la solution à enroulement(s) 55 que dans celle à portion(s) renflée(s) 59, les portions intermédiaires 21 ne sont pas totalement thermiquement isolantes.

On peut pourtant souhaiter associer les fonctions d'articulation entre poches 19 et d'isolation thermique sans, ou avec peu de, ponts thermiques, étant noté, en relation avec ces questions de positionnement ou fixation mécanique relative, l'intérêt de la solution schématisée dans son principe figure 4. A l'endroit des portions intermédiaires 21, on doit toutefois imaginer l'illustration de la figure 4 avec des enroulements 55 ou portions renflées 59, même si elles ne sont représentées.

Figure 4 les portions intermédiaires 21 sont définies par au moins une structure 79 à matériau isolant thermique 81 (de préférence poreux pour être intégré à une structure PIV globale), assurant une continuité d'isolation thermique entre lesdites deux poches. Le matériau 81 pourra être identique au matériau isolant thermique poreux 57, car il sera favorablement flexible, pour l'articulation souhaitée.

Dans l'exemple de la figure 4, le matériau poreux (ici en forme de plaque) 81 de chaque structure flexible 79 qui s'étend suivant l'épaisseur entre la(les) feuille(s) flexible(s) 49 de l'enveloppe 37, s'interrompt dans le matériau isolant thermique poreux 23 qui remplit les poches 19. Il pourrait toutefois y avoir continuité.

Plus épaisses que les tissus imprégnés, par exemple plus de 2.5 à 3 fois plus épaisses, et par exemple formées en bloc, comme schématisé, les poches 19 à matériau isolant thermique 23 seront typiquement plus rigides que les structures flexibles d'articulation 79, voire les portions renflées à structure 55 ou 59.

Pour que le panneau 50 ainsi formé acquière sa constitution PIV, sous vide partiel, on procédera bien sûr à une telle mise sous vide, avec scellement, après que les couches ou plaques de matériaux poreux 23,81 aient été toutes enveloppées par la ou les feuilles étanches flexibles 49. Et ce scellement, continue sur toute la périphérie, en 49a sera de préférence unique pour un même panneau 50, dans le sens où il n'y aura de préférence pas de scellement d'étanchéité à l'endroit des portions intermédiaires 21. C'est alors un même vide global, partagé par tous les composants 19, 55 et 59, 21.., qui écrasera sur elle-même l'enveloppe 49 ou 51.

Pour réaliser les structures 79, voire 55/59, on pourra en particulier, comme schématisé figure 9, utiliser un support flexible en maillage polymère de quelques mm d'épaisseur imprégné d'un aérogel 81 organique, par exemple de silice, ou son pyrolat (aérogel pyrolysé, étant précisé que cette alternative de pyrolat s'applique à chaque cas de la présente description où un matériau poreux thermiquement isolant est concerné). Le support flexible 83 sera favorablement formé d'une trame vierge (par exemple un tissé, non tissé organique ou inorganique) tel un polyester ou un polyamide imbibé de particules isolantes d'aérogel (monolithique fin fractionné par exemple) coincées entre les fibres, ce qui permettra de conserver une bonne flexibilité.

Pour information, une structure d'isolation présentée ci-avant 50 avec pour matériaux coeur des aérogels nano-poreux ou de leur pyrolat pourra présenter une conductivité thermique inférieure à 10mW.m-1.K-1 pour une pression interne de 2 à 5 à 10⁻³ Pa. La dépression dans les poches, voire les portions 21, pourra être celle habituelle des PIV : 10⁻² à 10⁻³ Pa.

En liaison avec les figures 2,3,6,7(qui ne l'impose toutefois bien sûr pas) on notera encore, comme déjà mentionné, qu'il est possible que certaines au moins des poches à constitution PIV et/ou des zones de portions intermédiaires pourraient contenir au moins un matériau MCP.

S'il y a deux couches de ce matériau, la seconde couche sera, là où les deux couches existent, disposée autour de la première couche, avec interposition entre elles du matériau 23. Ainsi, on pourra s'arranger pour qu'une température extérieure excessivement froide ou chaude n'interfère que peu avec celle dans un volume intérieur 77 à protéger. La première couche pourra être définie pour lisser en périphérie les variations internes de température dans ce volume. La première couche aura une première température de changement d'état, la seconde couche en ayant une seconde, différente.

S'il n'y a qu'une seule couche de ce matériau 15, elle sera donc favorablement entourée par la couche de matériau isolant thermique retenu

Il est aussi à noter que les poches 19 ne seront pas nécessairement strictement planes. Ainsi, une forme courbe est possible qui peut être réalisée en raccourcissant la longueur de la feuille de l'enveloppe 37 d'un côté par rapport à la longueur de la feuille de l'autre côté. Une fois scellée, la poche se cintrera naturellement sous la tension mécanique exercée.

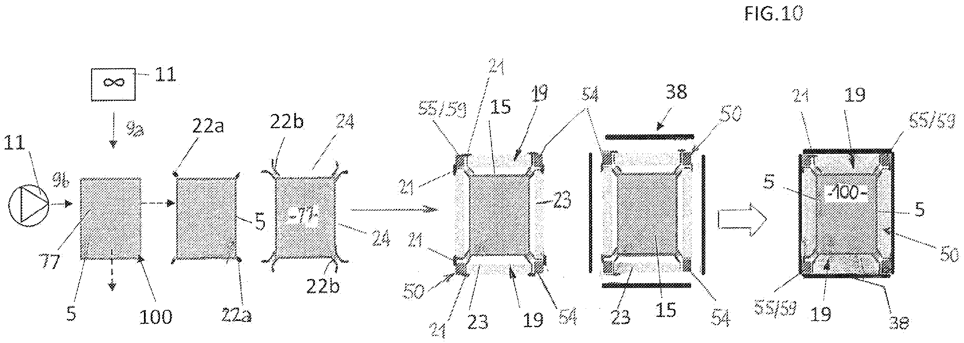

Une application autre que sur une unité de type stockeur-échangeur comme dans le cas de la figure 1 est schématisée figure 10 qui montre le conditionnement latéral extérieur d'un élément 100, qui peut être un échangeur thermique contenant un espace interne d'échange 77. Sous l'action de moyens 11 de circulation de fluide(s), qui peuvent comprendre une pompe et/ou un ventilateur, un premier fluide frigorigène ou caloporteur 9a (tel un liquide à refroidir) peut circuler dans le volume interne 7, ici de l'échangeur 100, en échange thermique avec un second fluide 9b (tel de l'air), les deux fluides ne se mélangeant pas. Les pointillés montrent qu'ils ressortent de l'échangeur, typiquement pour passer dans un circuit externe à l'élément 100 (par exemple un circuit de refroidissement du fluide hydraulique dans un véhicule).

Des entretoises, ou excroissances, de maintien complémentaires 22a,22b ici fixées avec la paroi latérale périphérique 5 de l'élément 100 délimitent entre elles, deux à deux, latéralement et donc autour de la paroi périphérique, les espaces ouverts 24 où est disposé un panneau 50 à poches 19 à constitution PIV renfermant chacune au moins un élément isolant thermique poreux 23.

Une couche contenant un matériau MCP aura pu être disposée soit dans une fente périphérique de la paroi 5 elle-même, soit autour de cette paroi ; typiquement dans les poches 19, avec alors une facilité de mise en oeuvre et une efficacité thermique renforcée du fait de la double couche MCP/isolant.

Des coins stabilisateurs formés chacun d'une dite partie tubulaire 54 porteur d'un matériau 23 peuvent compléter les excroissances de maintien 22a,22b pour bien stabiliser les poches 19, tout autour de la paroi latérale périphérique 5.

Ainsi, les dites parties tubulaires pourront former une partie au moins de ces entretoises adaptées à réserver un espace de logement des poches 19
Un manchon 38 (en une ou plusieurs parties) s'étend étroitement autour des entretoises et des éléments isolants thermiques 23 à constitution PIV, de façon à maintenir ces derniers dans les espaces 24.

Par la figure 11, on a voulu schématiser le fait qu'un panneau articulable 50 pourrait être intégré avec la paroi 85 d'une pièce 87.

La paroi 85 peut être du plastique et le panneau 50 peut être noyé, par moulage, dans cette paroi.

Aux angles, on peut en particulier trouver une dite partie tubulaire 54 interposée entre deux poches 19.

La capacité d'articulation du panneau 50 aura permis de le mettre facilement en place dans le moule.

## Revendications

1. Panneau articulé pouvant être fermé sur lui-même et comprenant une série de poches (19) sous atmosphère contrôlée :
- contenant individuellement au moins un matériau isolant thermique (23), et
- réunies par des portions intermédiaires (21) flexibles où deux poches successives peuvent s'articuler l'une par rapport à l'autre,
**caractérisé en ce que** certaines au moins des portions intermédiaires d'articulation comprennent :
- une partie tubulaire (54) définie par un enroulement thermiquement isolant (55) ou par une portion renflée (59) renfermant un matériau thermiquement isolant dans une enceinte tubulaire sous atmosphère contrôlée, et
- deux parties d'au moins une feuille flexible (49), chacune interposée entre ladite partie tubulaire et une dite poche (19).

2. Panneau articulé selon la revendication 1, où les poches (19) et parties tubulaires (54) sont sous vide et lesdits matériaux (23,57) isolants thermiques contenus sont poreux.

3. Panneau articulé selon l'une des revendications précédentes, où les poches (19), les parties tubulaires (54) et lesdites parties d'au moins une dite feuille flexible (49) intercalées entre une dite partie tubulaire (54) et une dite poche (19) sont communément sous une même atmosphère contrôlée, avec un seul scellement (49a), uniquement en périphérie extérieur du panneau.

4. Panneau articulé selon l'une des revendications 1,2, où les poches (19) sont individuellement sous atmosphère contrôlée (51) et deux poches (19) successives sont reliées par desdites parties d'au moins une dite feuille flexible (49) qui entoure et lie ensemble les poches (19), les parties tubulaires (54) et lesdites parties de feuille(s) flexible(s) intercalées.

5. Panneau articulé selon l'une des revendications précédentes, où le matériau isolant thermique (57) contenu dans les parties tubulaires (54) est différent du matériau isolant thermique (23) des poches.

6. Ensemble comprenant :
- le panneau articulé selon l'une des revendications précédentes, avec les parties tubulaires (54) qui présentent, suivant un axe (76) autour duquel le panneau est enroulé sur lui-même, des sur-longueurs (69) par rapport à une longueur (L2) des poches 19, et
- un fond (71) et un couvercle (73) intégrant ou doublés chacun par un dit matériau isolant thermique (23) et à angles concaves (61) engagés avec lesdites sur-longueurs, pour les recevoir à l'endroit desdits angles concaves, de manière à obtenir un volume intérieur (77) thermiquement isolé de l'extérieur.

7. Ensemble comprenant :
- le panneau articulé (50) selon l'une des revendications 1 à 5,
- au moins une structure pourvue d'une paroi périphérique (5) et présentant au moins un volume intérieur (77) où est présent l'un au moins parmi :
-- un fluide (9a,9b) frigorigène ou caloporteur pouvant circuler dans le ou lesdits volumes sous l'action de moyens de circulation,
-- au moins un élément (100) à maintenir à une certaine température,
-- au moins un élément (3) dégageant de la chaleur,
- un manchon périphérique (38), et
- des entretoises, ou excroissances (22a,22b) de maintien interposées latéralement entre la paroi périphérique (5) et le manchon périphérique (38), les entretoises ou excroissances délimitant entre elles, latéralement et autour de la paroi périphérique, des espaces ouverts (24) où sont disposées les poches (19) du panneau articulé (50), le manchon périphérique (38) s'étendant ainsi autour dudit panneau (50).

8. Ensemble selon la revendication 7, où les entretoises ou excroissances de maintien sont fixées avec la paroi périphérique (5) par des coopérations de formes.

9. Ensemble selon la revendication 7 ou 8, où les entretoises ou excroissances de maintien sont creuses et reçoivent les parties tubulaires (54) du panneau.

10. Ensemble selon l'une des revendications 7 à 9 où, en tant qu'entretoises ou excroissances, la paroi périphérique (5) présente extérieurement des étriers où sont disposées lesdites parties tubulaires (54).

11. Ensemble selon l'une des revendications 7 à 10, qui comprend en outre au moins une couche (15) contenant un matériau à changement de phase disposée dans la paroi périphérique (5) ou autour de ladite paroi périphérique.

## Patentansprüche

1. Gelenkige Platte, die in sich geschlossen werden kann und eine Reihe von Taschen (19) unter kontrollierter Atmosphäre enthält, die
- einzeln zumindest ein wärmedämmendes Material (23) enthalten, und
- durch flexible Zwischenabschnitte (21) zusammengefügt sind, wobei zwei aufeinanderfolgende Taschen gelenkig miteinander verbunden werden können,
**dadurch gekennzeichnet, dass** zumindest bestimmte der Gelenkzwischenabschnitte enthalten:
- einen rohrförmigen Abschnitt (54), der durch eine wärmedämmende Wicklung (55) oder einen gewölbten Abschnitt (59) definiert ist, die/der ein wärmedämmendes Material in einer rohrförmigen Umhüllung unter kontrollierter Atmosphäre einschließt, und
- zwei Teile von zumindest einer flexiblen Folie (49), die jeweils zwischen dem rohrförmigen Abschnitt und einer Tasche (19) angeordnet sind.

2. Gelenkige Platte nach Anspruch 1, wobei die Taschen (19) und die rohrförmigen Abschnitte (54) unter Vakuum stehen und die darin enthaltenen wärmedämmenden Materialien (23, 57) porös sind.

3. Gelenkige Platte nach einem der vorangehenden Ansprüche, wobei die Taschen (19), die rohrförmigen Abschnitte (54) und die Teile von zumindest einer flexiblen Folie (49), die zwischen einem rohrförmigen Abschnitt (54) und einer Tasche (19) eingesetzt sind, gemeinsam mit einer einzigen Dichtung (49a) nur am Außenumfang der Platte unter derselben kontrollierten Atmosphäre stehen.

4. Gelenkige Platte nach einem der Ansprüche 1, 2, wobei die Taschen (19) einzeln unter kontrollierter Atmosphäre (51) stehen und zwei aufeinanderfolgende Taschen (19) über die Teile der zumindest einen flexiblen Folie (49) verbunden sind, welche die Taschen (19), die rohrförmigen Abschnitte (54) und die dazwischen eingesetzten Teile der flexiblen Folie(n) umgibt und miteinander verbindet.

5. Gelenkige Platte nach einem der vorangehenden Ansprüche, wobei das in den rohrförmigen Abschnitten (54) enthaltene wärmedämmende Material (57) sich von dem wärmedämmenden Material (23) der Taschen unterscheidet.

6. Anordnung, enthaltend:
- die gelenkige Platte nach einem der vorangehenden Ansprüche mit den rohrförmigen Abschnitten (54), die entlang einer Achse (76), um welche die Platte auf sich selbst aufgewickelt ist, Überlängen (69) bezüglich einer Länge (L2) der Taschen (19) aufweisen, und
- einen Boden (71) und einen Deckel (73), die jeweils einstückig mit einem wärmedämmenden Material (23) ausgeführt oder damit ausgekleidet sind und konkav verlaufende Ecken (61) aufweisen, die mit den Überlängen in Eingriff stehen, um sie an der Stelle der konkav verlaufenden Ecken aufzunehmen, so dass ein von außen wärmegedämmter Innenraum (77) entsteht.

7. Anordnung, enthaltend:
- die gelenkige Platte (50) nach einem der Ansprüche 1 bis 5,
- zumindest eine Struktur, die mit einer Umfangswand (5) versehen ist und zumindest einen Innenraum (77) aufweist, wo zumindest eines aus Folgendem vorhanden ist:
-- ein Kälte- oder Wärmeträgermittel (9a, 9b), das unter der Wirkung von Umwälzeinrichtungen in dem Raum bzw. den Räumen strömen kann,
-- zumindest ein Element (100), das auf einer bestimmten Temperatur zu halten ist,
-- zumindest ein Wärme abgebendes Element (3),
- eine umlaufende Manschette (38), und
- Haltestreben oder -vorsprünge (22a, 22b), die seitlich zwischen der Umfangswand (5) und der umlaufenden Manschette (38) eingesetzt sind, wobei die Streben bzw. Vorsprünge zwischen sich, seitlich und um die Umfangswand herum offene Räume (24) begrenzen, wo die Taschen (19) der gelenkigen Platte (50) angeordnet sind, wobei die umlaufende Manschette (38) sich so um die Platte (50) herum erstreckt.

8. Anordnung nach Anspruch 7, wobei die Haltestreben bzw. -vorsprünge durch Formschluss an die Umfangswand (5) befestigt sind.

9. Anordnung nach Anspruch 7 oder 8, wobei die Haltestreben bzw. - vorsprünge hohl ausgeführt sind und die rohrförmigen Abschnitte (54) der Platte aufnehmen.

10. Anordnung nach einem der Ansprüche 7 bis 9, wobei die Umfangswand (5) als Streben bzw. Vorsprünge außen Bügel aufweist, wo die rohrförmigen Abschnitte (54) angeordnet sind.

11. Anordnung nach einem der Ansprüche 7 bis 10, wobei sie ferner zumindest eine Schicht (15) enthält, die ein Phasenwechselmaterial enthält und in der Umfangswand (5) oder um die Umfangswand herum angeordnet ist.

## Claims

1. An articulated panel that can be closed on itself and comprising a series of pockets (19) under a controlled atmosphere:
- which individually contain at least one thermally insulating material (23), and
- which are joined together by flexible intermediate portions (21) where two successive pockets can be articulated with respect to each other,
**characterized in that** at least some of the intermediate articulating portions comprise:
- a tubular part (54) defined by a thermally insulating winding (55) or by a bulged portion (59) enclosing a thermally insulating material in a tubular chamber under controlled atmosphere, and
- two parts of at least one flexible sheet (49), each part being interposed between one said tubular part and one said pocket (19).

2. The articulated panel of claim 1, wherein the pockets (19) and tubular parts (54) are under vacuum and said thermally insulating materials (23,57) contained therein are porous.

3. The articulated panel of one of the preceding claims, wherein the pockets (19), the tubular parts (54) and said parts of at least one said flexible sheet (49) interposed between one said tubular part (54) and one said pocket (19) are together under the same controlled atmosphere, with a single seal (49a), at the outer periphery of the panel, only.

4. The articulated panel according to one of claims 1 or 2, wherein the pockets (19) are individually under controlled atmosphere (51) and two successive pockets (19) are connected by said parts of said at least one said flexible sheet (49), which encircles and binds together the pockets (19), the tubular parts (54), and said interposed parts of flexible sheet(s).

5. The articulated panel of one of the preceding claims, wherein the thermally insulating material (57) contained in the tubular parts (54) is different from the thermally insulating material (23) of the pockets.

6. An assembly comprising:
- the articulated panel of one of the preceding claims, wherein the tubular parts (54) have, along an axis (76) around which the panel is wound on itself, overlengths (69) longer than a length (L2) of the pockets 19, and
- a bottom (71) and a cover (73) each incorporating or doubled by one said thermally insulating material (23) and having concave corners (61) engaged with said overlengths, to receive them at the location of said concave corners, so as to have an inner volume (77) that is thermally insulated from the outside.

7. An assembly comprising:
- the articulated panel (50) of one of claims 1 to 5,
- at least one structure provided with a peripheral wall (5) and having at least one interior volume (77) in which there is at least one of the following:
-- a refrigerant fluid or a heat transfer fluid (9a, 9b) capable of circulating in said volume(s) under the action of circulation means,
-- at least one element (100) to be maintained at a certain temperature,
-- at least one element (3) releasing heat,
- a peripheral sleeve (38), and
- retaining spacers or retaining protrusions (22a, 22b), laterally interposed between the peripheral wall (5) and the peripheral sleeve (38), the spacers or protrusions delimiting between one another, laterally and around the peripheral wall, open spaces (24) in which are arranged the pockets (19) of the articulated panel (50), so that the peripheral sleeve (38) extends around said panel (50).

8. The assembly of claim 7, wherein the retaining spacers or retaining protrusions are fixed with the peripheral wall (5) by cooperating shapes.

9. The assembly of claim 7 or 8, wherein the retaining spacers or retaining protrusions are hollow and receive the tubular parts (54) of the panel.

10. The assembly of one of claims 7 to 9 wherein the peripheral wall (5) has external clamps, serving as said spacers or protrusions, on which said tubular parts (54) are installed.

11. The assembly of one of claims 7 to 10, which further comprises at least one layer (15) containing a phase change material installed within the peripheral wall (5) or around said peripheral wall.
